# EUROPEAN PATENT APPLICATION

(11) **EP 3 531 434 A1**
(43) Date of publication of application: **28.08.2019**
(21) Application number: 18158593.6
(22) Date of filing: 26.02.2018
(51) Int. Cl.: H01F 27/26, H02K 1/18

(54) **MAGNET HOLDER AND MAGNET HOLDER ASSEMBLY**

(71) Applicant: Honeywell International Inc., Morris Plains, NJ 07950 (US)
(72) Inventor: ZHOU, Yu, Morris Plains, NJ 07950 (US); YIN, Gen, Morris Plains, NJ 07950 (US); KONG, Lei, Morris Plains, NJ 07950 (US)
(74) Representative: Houghton, Mark Phillip

(57) **Abstract**

The present invention discloses a magnet holder and magnet holder assembly, and in particular a single part moulding magnet holder in which a magnet is readily inserted in a clip-in fashion and held so that it cannot readily be clipped out whilst the holder is attached to a surface, such as by an adhesive member and/or fasteners. A suitably placed adhesive member aids installation and can work cooperatively with the magnet when locating suitable fasteners for attaching the holder to a surface during installation. A kit of parts comprising the magnet holder, a lid and fastening means provides a quick, convenient and robust means of attaching a magnet to a surface. The particular preferred configuration of the magnet holder protects brittle magnets from breakage.

## Description

The present invention relates to a magnet holder and a magnet holder assembly, comprising a magnet and the magnet holder for holding the magnet, such as to be installed against a surface.

### Field of use

Such magnet holders are known in the field of premises security in which magnet holders, comprising magnets are located on movable objects so that when the object is moved a suitable proximity detector, such as a reed switch can be activated or released so as to enable an alarm to be activated as part of an alarm system. A suitable holder may find other uses.

### Background

The use of magnets in alarm systems is known, and the use of magnet holders is known. Example disclosures can be found as follows:
US2007029048 discloses a holder for magnetic adhesive tape. JP2017192486 (A) discloses a holder for a magnet suitable for mounting the magnet against a surface. JP2006056174 (A) discloses a magnet holder suitable for use with doors. JP2004148016 (A) discloses a box-like magnet holder. AU2016381827 (A1) discloses the use of a magnet in an alarm system such as to detect opening of a window. CN107110918 (A) discloses a magnet in a magnet holder for use in an alarm system, such as installed in a window.

### Problems with known devices

There remains a need for an improved magnet holder, such as a magnet holder suitable for attaching a magnet to a surface. The magnet holder should serve to effectively protect the magnets, which may be brittle, from external impact but also enable ready insertion and possibly removal of the magnet when required. The magnet holder should facilitate installation of the magnet holder, such as by attachment to a support surface. The installation of magnet holders in awkward and difficult places is an ongoing problem in security systems installation and features to facilitate this installation are desirable. Features to facilitate mounting of the magnet holder in different manners and on different surfaces are desirable. The magnet holder should also protect the magnet from environmental effects, such external impacts and/or the ingress of water. Particularly when a magnet holder holding a magnet is used as part of a security system it is desirable that the magnet is not readily moved once installed, however installation itself to put the magnet in the holder should be simple and convenient. All these features as present in known devices are capable of improvement in the present invention, which addresses the above an the problem of providing an improved magnet holder having at least one of the above features in an alternative or improved form and preferably a combination of two or more of these features.

### Summary

The present invention in its various aspects is as set out in the appended claims.

The present invention provides a magnet holder, the magnet holder comprising:
a. an outer shell comprising a peripheral wall 440, 450;
b. a base portion 310 from which the peripheral wall 440 laterally extends;
c. on or more magnet retaining clips 16, those clips 16:
   i. being remote from the peripheral wall 440, 450;
   ii. being secured on a first side to the base portion 310 by deformable member 16A;
   iii. such that the one or more clips 16 may be moved to, in use, enable a magnet 200 to be introduced; and
   iv. on a side of the one or more clips 16 remote from the first side, an outer base portion 410 is present and configured such that it must be moved relative to the central base portion 310 for the moving apart of the one or more clips 16, such as to, in use enable a magnet 200 held by the one or more clips 16 to be removed.

The magnet holder enables quick and east manual insertion of a magnet by moving a clip, putting the magnet in place and moving, or allowing to move, the clip back and secure the magnet in place. Subsequent securing the holder on a support surface prevents the base portion moving and as such keep the magnet in place.

The deformable member(s) 16A of the present invention is/are preferably resiliently deformable to enable them to move back in place after deformation, such as to provide a snap fit of the magnet. The deformable member(s) 16A is preferably an elbow, as this conveniently focusses distortion on a single sub part of the holder (e.g. by making it suitably thin and hence preferably deformable.
The whole holder is preferably a unitary object, such as provided by a single injection moulded part. The present invention facilitates such a design and as such makes the invention for economic and less complex to manufacture.

In this the invention may be as represented in the attached detailed description but where only one clip is moveable, the other clip function being replaced by a member not being moveable, such as the end wall 450 (or simply a clip without a deferable member component 16A.

In a preferred embodiment, two or more clips are present, as this reduced the degree of distortion required and keeps the clips remote from other structures and so protects the magnet from external impact. This may be described as the magnet holder of claim 1, the magnet holder further comprising:
a. two or more of the magnet retaining clips 16, those clips 16:
   i. being each secured on a first side to the base portion 310 by deformable members 16A;
   ii. such that the clips 16 may be moved apart from one another to, in use, enable a magnet 200 to be introduced between the clips 16; and
   iii. on a side of each clip 16 remote from the first side, an outer base portion 410 is present and configured such that it must be moved relative to the central base portion 310 for the moving apart of the clips 16, such as to, in use enable a magnet 200 held between the clips 16 to be removed.

In other words, this embodiment may be described as a magnet holder, the magnet holder comprising:
a. an outer shell comprising a peripheral wall 440, 450;
b. a base portion 310 from which the peripheral wall 440 laterally extends;
c. on or more magnet retaining clips 16, those clips 16:
   i. being remote from the peripheral wall 440, 450;
   ii. being secured on a first side to the base portion 310 by deformable member 16A
   iii. such that the clips 16 may be moved apart from one another to, in use, enable a magnet 200 to be introduced between the clips 16; and
   iv. on a side of each clip 16 remote from the first side, an outer base portion 410 is present and configured such that it must be moved relative to the central base portion 310 for the moving apart of the clips 16, such as to, in use enable a magnet 200 held between the clips 16 to be removed.

More preferably there are two clips 16 and the clips 1 are laterally opposed for, in use, receiving a magnet 200 between them. This readily accommodates an elongate magnet of a type typically used in security systems detector applications.

The magnet holder having the base portion 310 may have attached thereto a double sided adhesive cover 510 suitable for attaching the magnet holder to a mounting surface 120. This provides an effective means for securing the magnet holder to a surface, for the purposes of installation and also to prevent the movement relative to the central base portion 310.

The double sided adhesive cover 510 preferably covers the whole of the base portion of the magnet holder 310, 410, 420 and the double sided adhesive cover is configured to deformably cover the separation of the clips 16 from the peripheral wall 440, for prevention of the ingress of material into the magnet holder 10 from the direction of the base. The provides a sealed assembly, particularly when a lid is attached to protect the magnet.

The magnet holder outer base portion 410 may comprise a retaining fastener aperture 100 for accommodating a fastener suitable for fastening the magnet holder against a surface to prevent, when so fastened said movement relative to the central base portion 310 for the moving apart of the one or more clips 16. This is a further means by which the magnet is held in place, and prevented from being removed short of breaking the holder when the attached to a support surface.

The magnet holder may be so configured that the magnet retaining clips 16 serve, in use when holding a magnet, to restrict lateral movement of the magnet and a further magnet retaining latch 18 as an outer end of the retaining clip 16 serves to restrict movement of the magnet in a first direction perpendicular to the lateral direction and magnet supports 220 serve to restrict movement of the magnet in a second direction perpendicular to the lateral direction and opposite to the first direction. This further restraining of the magnet increases reproducibility of magnet location and reduced movement, such as vibration, for example when opening and closing a window to which it may be attached.

The present invention includes a magnet holder assembly 30 comprising the magnet holder as herein described may further comprising a magnet 200 retained by the retaining clips 16 of the magnet holder 10 and a magnet holder lid 20 to enclose the magnet within the magnet holder.

The magnet is preferably a cylindrical magnet so configured to about magnet clips 16 at its circular ends.

The magnet holder assembly may further comprise a magnet holder lid 20. This may provide a hermetic seal with the magnet holder 10 and further comprising in the double sided adhesive cover 510 providing a hermetic seal with the magnet holder 10 such that the magnet is hermetically sealed within the magnet holder.

The present invention also includes a kit of parts comprising the magnet holder of any of claims 1 to 7, a magnet 200 for retention by the retaining clips 16 of the magnet holder 10 and a magnet holder lid 20 for enclose the magnet within the magnet holder. This enables ready, in-situ manual assembly such that the end user is assured of the integrity of all the parts before use as they are each inspectable before assembly and any defective part may be replaced.

The kit of parts may further comprise fasteners 110 for fastening the magnet holder 10 to a support surface through said retaining fastener apertures 100. The fasteners are preferably wood screws or self tapping screws.

The retaining fasteners 110 are preferably ferromagnetic so that the magnet keeps them in place prior to fastening.

There are preferably two retaining fastener apertures 100. This secures the whole device and stops magnet removal unlike if only one fastener wee present. At leaser one retaining fastener aperture is located in an outer base portion 410. More preferably there are two clips 16 and the clips 1 are laterally opposed for, in use, receiving a magnet 200 between them and each has one retaining fastener aperture is located in an outer base portion 410.

Th present invention includes a method of attaching a magnet holder 10 to a mounting surface 120 comprising inserting a magnet 200 into the magnet holder and attaching the magnet holder 10 to the mounting surface such that the magnet 200 cannot be removed by virtue of restricting the movement of the magnet retaining clips 16.

The method may further include placing ferromagnetic retaining fasteners 110 in retaining fastener apertures 100 wherein the fasteners are retained in place by the magnet 200 prior to the attaching the magnet holder 10 to the support surface 120 by means of the fasteners 110.

### Advantageous features of the present invention

The present invention discloses a magnet holder and magnet holder assembly, and in particular a single part moulding magnet holder in which a magnet is readily inserted in a clip-in fashion and held so that it cannot readily be clipped out when the holder is attached to a surface, such as by an adhesive member and/or fasteners. A suitably placed adhesive member can aid installation and can work cooperatively with the magnet when locating suitable fasteners for attaching the holder to a surface during installation. Such as by adhering to ends of the fasteners to hold them in place before, for example, screwing in place (such as through the adhesive member. A kit of parts comprising the magnet holder, a lid and fastening means provides a quick, convenient and robust means of attaching a magnet to a surface. The particular preferred configuration of the magnet holder protects brittle magnets from breakage.

### Description of features

The present invention comprises the following features as illustrated in the figures:
10, magnet holder;
12, lid release aperture;
14, magnet location;
16, magnet retaining clip;
16A, magnet retaining clip elbow (deformable member);
18, magnet retaining latch;
20, magnet holder lid;
30, magnet holder assembly;
32, monitored object;
40, monitoring device;
42, monitoring device mounting surface;
44, magnetic sensor;
100, retaining fastener aperture;
110, 110', retaining fastener;
112, end of retaining fastener;
120, mounting surface (of monitored object);
160, magnet retaining clip distortion;
200, magnet;
210, insertion of magnet;
220, magnet support;
260, outer base portion displacement when inserting or removing magnet (200);
310, central base portion of magnet holder;
410, outer base portion;
420, base perimeter;
430, protrusion;
440, side wall;
450, end wall;
510, adhesive pad securing means;
512, release tape; and
520, lid locating recess.

### Description of figures

The present invention will now be illustrated by the following figures in which:
figure 1 shows a perspective view of a magnet holder of the present invention;
figure 2 shows a perspective view, from above, of a magnet holder assembly of the present invention;
figure 3 shows an application of the magnet holder assembly of the present invention;
figure 4 shows a longitudinal cross-section down the centre of the magnet holder of the present invention;
figure 5 shows the insertion of a magnet into a magnet holder of the present invention;
figure 6 shows a magnet retained in a magnet holder of the present invention;
figure 7 shows a magnet holder plus magnet of the present invention secured to a surface;
figure 8 shows a vertical cross-section magnet holder of the present invention with alternative securing means; and
figure 9 shows a magnet holder of the present invention in perspective view, from below.

All figures are illustrative of the present invention and not necessarily limiting.

The magnet holder illustrated in the appended figures is particularly preferable as it is not only robust and readily assembled into the form of a magnet holder assembly comprising a magnet but it is also a one piece moulding suitable for mass production.

For clarity the diagrams of the present invention do not number symmetric parts. It will therefore be appreciated that magnet retaining clip 16 has a counterpart feature on the other side of the device having the same function. Throughout this application such features are not referred to in duplicate but will be immediately evident from the diagrams to show that they are present, for example features 12, 16, 18, 220, 410, 420, 430, 520, 440, 450 are all nonlimiting examples of such features. Such counterpart features can be referred to using the same number but with the superscript', such as 16'.

### Detailed description of the present invention

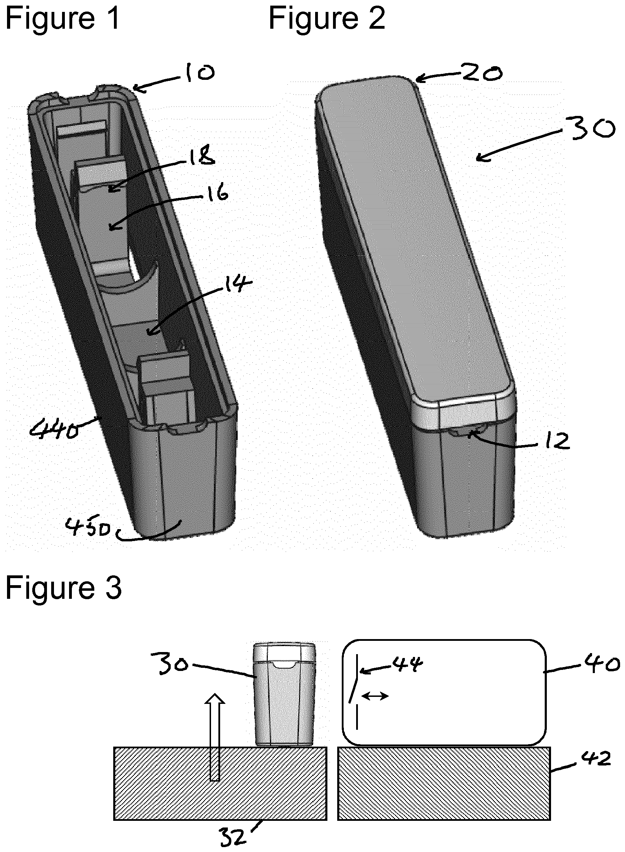

Referring now to Figure 1 which shows a perspective view of a magnet holder of the present invention, the magnet holder 10 comprises encloses a space 14 as a magnet location in which a magnet can be quickly and effectively secured and retained in place by means of magnet retaining clip 16. This retention is facilitated by magnet retaining latch 18 in conjunction with magnet support 220 between which the magnet is captured, those features being configured in such a way as to allow limited, or preferably effectively no play of the magnet when so secured. If no fully secured, side walls 440 of the magnet holder further assist in preventing any lateral movement, but contact with these walls is not preferred as it can expose the magnet to outside forces, such as knocks and bangs. The magnet 200 is preferably cylindrical and as such a matching curved surface of magnet support 220 and of magnet retaining latch 18 serves to fully retain the magnet in place without walls 440 contacting the magnet 200 (? ... or not). Longitudinal movement of the magnet is stopped by magnet retaining clip 16. This combination of retaining features for the magnet means that the magnet is not in contact with any exposed external wall of the magnet holder, such as side walls 440 or end walls 450 or, when in place, magnet holder lid 20. This has the advantage that impact on the external faces of the magnet holder assembly can be absorbed by the assembly (in which instance the magnet is not considered part of the assembly) so as not to transfer force directly to the magnet 200. Magnets are typically brittle fragile assemblies, particularly high strength magnets such as neodymium magnets and therefore the integrity of the magnet is protected by having all retaining means spaced from the in use exposed external surfaces of the magnet holder assembly. As will be seen later a central base portion 310, outer base portion 410 and base of walls perimeter 420 contact a mounting surface in use, but such surfaces are normally substantial in size and serve themselves to absorb shock from any impact upon them, and in any case serve to protect the assembly from direct shock from any impact. This configuration solves an ongoing problem of magnets in magnet holder assemblies being damaged by impact, such as the closing of a window to which they are attached or by the impact of tools on installation.

Further, the assembly is configured in such a way that the magnet is readily placed within the assembly and the intention is that this should be done immediately before securing the assembly for a final use and as such the installer can be sure that the magnet is complete and unbroken at this stage. Indeed, even if the installer is unconcerned whether the magnet is cracked or broken then the necessity to install the magnet 200 into the magnet location 14 and in doing so apply a certain amount of force to pass the magnet retaining latches 18 makes the operation extremely difficult if the magnet is in any way broken. A broken magnet, i.e. not being a unitary object is less efficient as there is loss of magnetic field continuity for any given field strength. The present invention therefore ensures the integrity both at the point of installation and after installation of a magnet in a magnet holder. Since a primary use of the present invention is to provide a magnet holder for use in security installations then the integrity of the magnet is crucial for ensuring that the system of which the magnet assembly (which includes the magnet) is able to function correctly. The magnet holder 10 of the present invention is preferably configured to hold a cylindrical magnet. Such a cylindrical magnet provides the greatest field and mechanical strength per unit volume, for example it presents a lowest surface area (per unit volume) for an elongate structure and reduces the chances of breakage.

It should be noted that whilst the magnet retaining latches 18 are preferred features the key concepts of the magnet retaining clips 16, which in an unattached state of the magnet holder 10 are movable to retain the magnet and in the attached state of the magnet holder 10 are not movable so as to release the magnet (i.e. the magnet is held in place) alternative retention means of the clips 16 may be contemplated. For example, the clips may comprise a recess in which the magnet is located or the magnet 200 itself may comprise features which locate on or around the magnet retaining clips 16.

Referring now to figure 2 which shows a perspective view of a magnet holder assembly of the present invention, here the magnet holder 10 has a magnet holder lid 20 attached so as to fully enclose the magnet 200 and thus protect the magnet as described above. The assembly has an optional lid release aperture 12 in which a tool can be conveniently placed so as to lever away the clip-on lid 20 from the magnet holder 10 so as to access the magnet (if not remove it without clips 16 moving) and any relevant securing means (110, 110', 510).

The magnet holder lid 20 is preferably a clip-on lid as this facilitates ready retention of the lid, particularly when the holder 10 is in an inconvenient orientation such that a non-clip-on lid would fall off. The lid may be clipped on by the location of a groove (not shown) in the lid against a protrusion 430 in the wall of the holder. Location of the protrusions at the ends of the magnet holder 10 enables ready distortion of the holder 10 such as by inserting an object in lid release aperture 12 so as to release the lid.

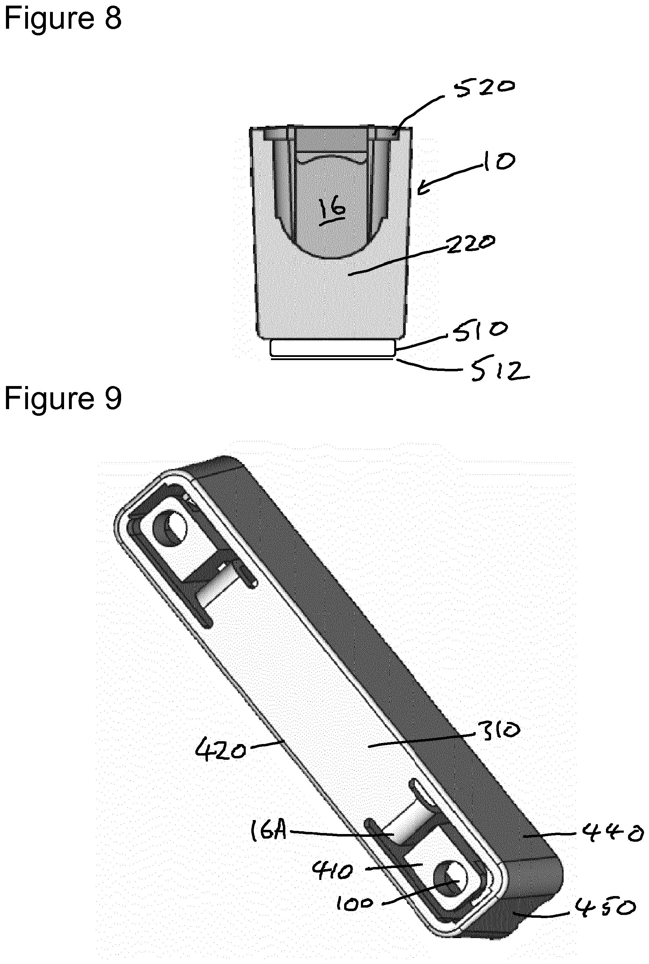

The lid is preferably located on a lid locating recess, preferably around the whole peripheral, in the magnet holder 10. A preferable form of this recess is exemplified in a lid locating recess feature 520, being an internal peripheral recess (shown in cross section in figure 8). The clip-on lid in combination with the recess serves to provide a watertight fixing of the magnet holder lid on the magnet holder to reduce moisture ingress. A hermetically sealed magnet holder 10 is conveniently created by means of a base pad 510 (see figure 8) which serves to flexibly seal the base of the assembly. Sealing the magnet holder serves to protect the magnet, since some magnets can corrode in damp environments. The susceptibility to corrosion depends on the composition of the magnet. A preferred composition for the magnet is a neodymium iron boron composition. The base pad 510 is preferably a double sided adhesive pad so as to give a seal between the pad 510 and the magnet holder 10 and also subsequently, such as by means of removing a protective release tape 512, such as of waxed Kraft paper or the like, to a support surface 120 for giving fast effective securing of the magnet holder. This may be preferentially combined with retaining fasteners 110, the adhesive tape keeping the holder 10 in place whilst the retaining fasteners can be secured. This facilitates installation where the installer may not be able to conveniently hold the magnet holder 10, the retaining fastener 110 (or equivalent fasteners, screws are suitable fasteners), a screwdriver et cetera in place, particularly in circumstances were this is awkward or inconvenient. This facilitates accurate installation. It also reduces the chances of breakage of the magnet during installation due to slippage of a screwdriver or other such tool whilst the installer tries to keep in place several objects at once. Most specifically, the use of a double sided adhesive tape (110) means that retaining fastener aperture 110 has a base 510 of an adhesive material so that when the retaining fastener 110 is placed in the aperture the fastener does not fall out as the end of the fastener 110 will be adhered to the tape 510. For these purposes the tape or pad, is preferably a pad as this gives some degree of flexibility and therefore a high surface area can be achieved for adhesion to the end 112 of the fastener 110 as such fasteners typically have irregular end surfaces. A suitable pad construction comprises an adhesive film, a formed foam layer and a further adhesive film.

Referring now to figure 3 which shows an application of the magnet holder assembly of the present invention. The assembly is attached to a monitored object 32 (such as a window frame or door frame), in this instance exemplified by a door or window which is capable of movement, as illustrated by the arrow. Proximity of the magnet holder assembly to a monitoring device 40 secured to a monitoring device mounting surface 42, in this instance a window or door frame (but alternatively such as a window or door) can be lost by opening or closing of the window or door and as such a magnetic sensor 44, such as a reed switch or Hall effect device may be actuated or released to provide an alarm signal. In the present invention the combination of a magnet holder assembly of the present invention, and the further features of figure 3 as described is a system of the present invention.

A specific advantage of the present invention, as a further consequence of the location of the magnet as described above, is that the assembly can be conveniently placed on moving parts, such as a window or door and the window or door can be vigorously opened or closed, such as if it is slammed, without risking breaking the magnet due to the protection of the magnet. This enables the conventionally multicomponent monitoring device to be placed in what is normally a more secure and less vibration-prone surface such as a bigger door frame or window frame or surrounding masonry.

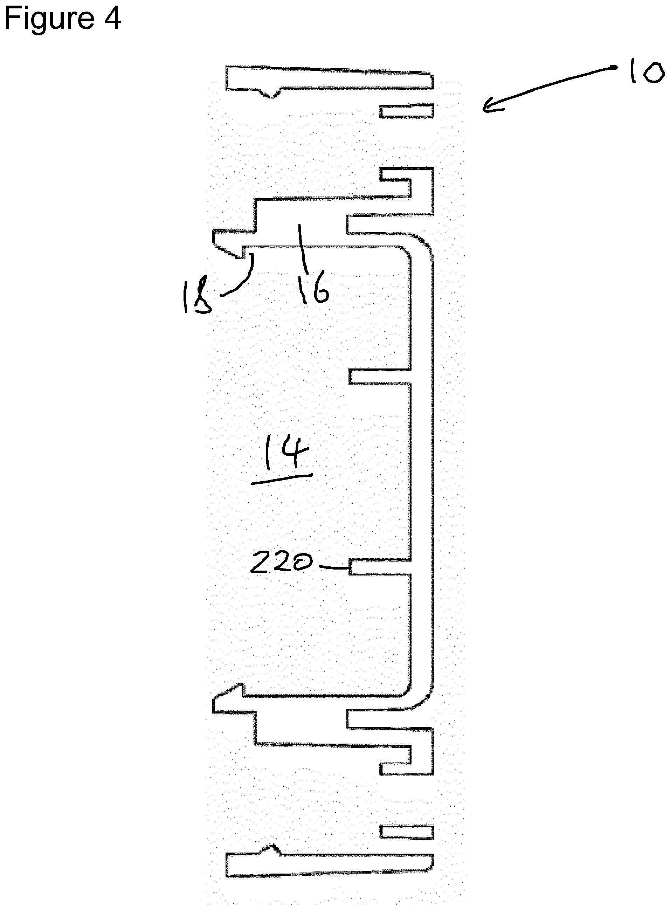

Referring now to figure 4 which shows a longitudinal cross-section down the centre of the magnet holder 10 of the present invention: the magnet location 14 in which a magnet 200 is placed has a magnet retaining clip 16 to stop longitudinal movement of the magnet 200 with a magnet retaining latch 18 to stop removal of the magnet 200, and magnet supports 220, preferably in the form of a semi-circular cradle, to retain the magnet 200 in place.

The magnet holder 10 of the present invention is preferably a single piece moulding of a plastic material. A plastic material being a deformable material, deformable to the extent that magnet retaining clips 16 may be displaced when the magnet assembly is not secured against a mounting surface, so as to displace the magnet retaining latch 18 sufficiently that a magnet (which is assumed to be of a non-deformable material, and is preferably of a non-deformable material, such as a high-strength magnet) may be inserted into magnet location 14 prior to installation on a mounting surface 120. Preferred plastics are polycarbonate and acrylonitrile butadiene styrene; both these materials and preferably the latter material have the capacity to absorb high-impact and protect a magnet. Brittle ferrite magnets, which are cost-effective, can be used even in harsh environments where protected by the magnet holder assembly of the present invention when correctly installed against a stable support surface, however also magnesium aluminium alloy and neodymium iron boron magnets, which are also brittle can be similarly protected. Magnet types which are not brittle are available, but these are typically of low magnetic field strength are not suitable for use with magnetic detector systems as the field does not extend sufficiently far from a typical holder to be useful.

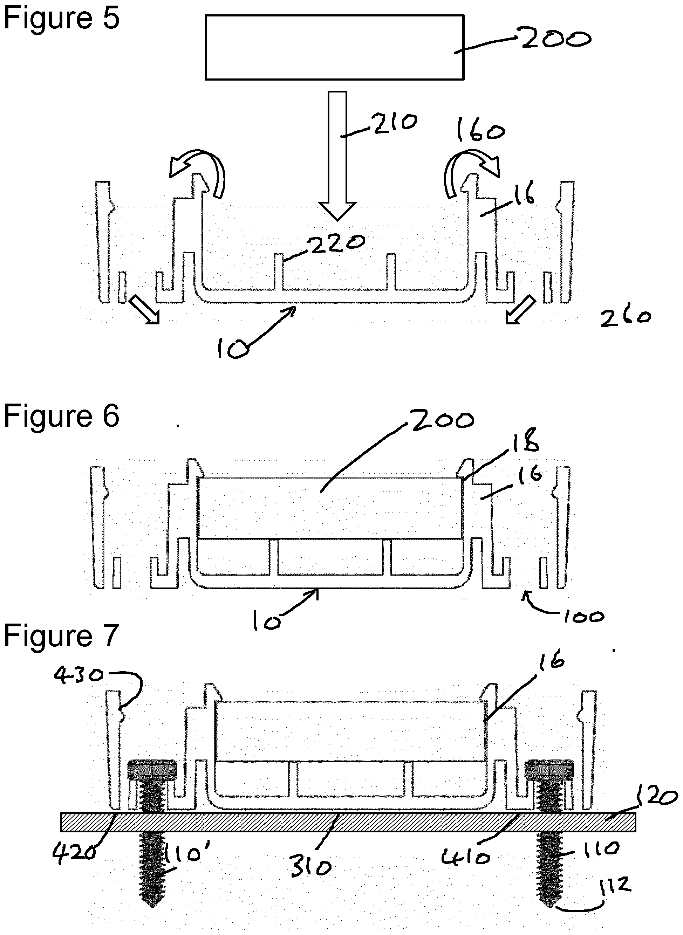

Referring now to figure 5 which shows the insertion of a magnet into a magnet holder of the present invention. At the point of installation of the magnet holder assembly for an end use, the magnet 200 can be readily inserted into the magnet holder 10 by means of a press fit into the magnet location 14. When not installed against a mounting surface 120, the magnet retaining clips 16 can be readily distorted particularly at elbow 16A as there is no resistance to movement against base portion 410, thus the magnet retaining latch 18 may be displaced axially and the magnet 200 conveniently placed in the magnet location 14 against the magnet supports 220. During this process there needs to be no distortion of the end wall 450 as only the retaining fastener aperture 100 and its surround are displaced below the plane of the central base portion 310 of the magnet holder.

The use of a cylindrical magnet 200 is preferable as this reduces the need for orientation of the magnet during insertion, which is typically carried out manually by an operator just before installation, hence simplicity of use is important.

Referring now to figure 6 which shows a magnet 200 retained in a magnet holder 10 of the present invention. This configuration is the endpoint from the operation shown in figure 5, and the magnet 200 is securely held in place, actually by means of magnet retaining clips 16, within the device by means of magnet retaining latches 18 and prevented from lateral movement by cupped or semi-circular magnet supports 220. The use of individual magnet supports 220 is advantageous as use of thin supports in combination with a deformable plastics material reduces the possibility of too much force been transferred to a magnet so as to break the magnet, the relatively thin profile of the support to 20 being preferentially deformed, such as due to any impact upon the central base portion 310 (such as if the mounting surface 120 is not particularly rigid).

Referring now to figure 7 which shows a magnet holder plus magnet of the present invention secured to a mounting surface 120. After assembly of the magnet holder 10 and magnet 200 this partial assembly can be affixed to a mounting surface 120. This has been described above. A first means is by use of retaining fasteners 110 alone, an alternative means is by use of an adhesive pad securing means 510 which preferably covers the whole of the base of the magnet holder so as to cover over the retaining fastener aperture 100 and also adjacent apertures in the base, such as can be partially seen in figure 1 and more fully seen in plan view in figure 9. The adhesive pad securing 510 may be a double sided adhesive cover.

Referring now to figure 8 which shows a magnet holder of the present invention with alternative securing means. Here the alternative securing means includes an adhesive pad or tape 510 as previously described. Similarly, as previously described this is preferably a pad and may more preferably be used in combination with fasteners 110.

The present invention also comprises a kit of parts for installing a magnet assembly, the kit of parts comprising a magnet holder 10 (as hereinbefore described and as set out in the appended claims), a magnet holder lid 20, a magnet 200, and adhesive pad 510 (which may be optionally pre-attached to the magnet holder 10 in the manner shown in figure 8, i.e. as adhered to a base of the magnet holder), and fasteners 110, the fasteners preferably being screws, most preferably being wood screws (i.e. screws for use in wood and similar substrates). These features are as described in more detail and in the various options elsewhere in this document.

When the magnet 200 is installed in the magnet holder 10, as required before use of retaining fasteners 110, these are preferably made of a ferromagnetic material, such as steel. Such as material further serves to retain the fasteners 110 in place during a fixing operation due to attraction by the magnet 200. This serves as an adjunct or alternative to the double sided adhesive cover 510 in retaining fasteners to facilitate, for example, manual placement of the device before securing the fasteners, such as by screwing. In a preferable form the present invention comprises double sided adhesive cover 510 in conjunction with the magnet for retaining ferromagnetic fasteners 110, such as in a kit of parts, as previously mentioned.

The magnet of the kit of parts is preferably a cylindrical magnet. An additional reason for this is because such magnets must inherently have a gap between parts of them and therefore they are more readily separated, particularly manually, from one another, which may be particularly important when a kit of parts comprises a plurality of parts for providing multiple assemblies.

Referring now to figure 9 which shows a magnet holder of the present invention in perspective view in an orientation which would be from a support surface on which it is installed. This view illustrates the separation (being remote) of the magnet retaining clips from the side walls 440 and end walls 450 of the magnet holder thus allowing the magnet retaining clip elbow 16A to distort and the magnet retaining clips 16 to move to accommodate insertion of magnet 200, such as illustrated in figure 5. In this fashion magnet retaining clip elbow 16A is a deformable member. This figure also specifically shows a perimeter 420 of the base 310, 410, that perimeter being evidenced in this drawing by means of a perimeter line and then external surrounding area. The magnet holder assembly 30 of the present invention preferably comprises a double sided adhesive cover (such as in the form of a tape or pad) which seals the base of the holder around the perimeter 420, such that moisture ingress to the magnet holder assembly (when sealed by attachment of the magnet holder lid 20) is limited. This has the advantages previously described. In addition, when the double sided adhesive cover 510 is in place then retaining fastener aperture 100 will be covered as the double sided adhesive cover preferably covers the whole base of the magnet holder 10. Thus, the retaining fastener 110 when placed in retaining fastener aperture 100 adheres to the notionally upper side (the side contacting the base) of the adhesive cover 510 and is thus advantageously retained in place (and thus does not fall out) prior to an attachment operation, such as rotation using a screwdriver or similar. This is advantageous in awkward and confined spaces, such as typically found when retrofitting alarm systems in buildings. It should be noted that the combination of adhesive cover 510 in the presence of magnet 200 is particularly advantageous as, particular when a strong magnet is used a ferromagnetic fastener 110 can easily become attached to the magnet and if the magnet is of a particularly strong sort, such as a neodymium magnet, then it can be particularly hard to manually remove such a fastener from the magnet, which is disadvantageous for the installer and can cause damage to the assembly. The adhesion of the adhesive cover works cooperatively with the magnet to stop this happening.

The alternative or combined possibilities of fasteners and an adhesive cover facilitates utilisation of the magnet holder 10 and the magnet assembly 30 on different surfaces (such as surfaces which may not accommodate a screw thread in the one instance or surfaces which are not readily adhered to in another instance).

The side walls 440 and end walls 450 of the magnet holder of the present invention, together providing a peripheral wall, are preferably jointed at rounded corners to provide a greater impact resistance. The magnet holder lid 20 preferably has a rounded upper surface also to provide greater impact resistance.

## Claims

1. A magnet holder, the magnet holder comprising:
a. an outer shell comprising a peripheral wall (440, 450);
b. a base portion (310) from which the peripheral wall (440) laterally extends;
c. on or more magnet retaining clips (16), those clips (16):
i. being remote from the peripheral wall (440, 450);
ii. being secured on a first side to the base portion (310) by deformable member 16A;
iii. such that the one or more clips (16) may be moved to, in use, enable a magnet (200) to be introduced; and
iv. on a side of the one or more clips (16) remote from the first side, an outer base portion (410) is present and configured such that it must be moved relative to the central base portion (310) for the moving apart of the one or more clips (16), such as to, in use enable a magnet (200) held by the one or more clips (16) to be removed.

2. The magnet holder of claim 1, the magnet holder further comprising:
a. two or more of the magnet retaining clips (16), those clips (16):
i. being each secured on a first side to the base portion (310) by deformable members 16A;
ii. such that the clips (16) may be moved apart from one another to, in use, enable a magnet (200) to be introduced between the clips (16); and
iii. on a side of each clip (16) remote from the first side, an outer base portion (410) is present and configured such that it must be moved relative to the central base portion (310) for the moving apart of the clips (16), such as to, in use enable a magnet (200) held between the clips (16) to be removed.

3. The magnet holder of claim 1, wherein there are two clips (16) and the clips (1) are laterally opposed for, in use, receiving a magnet (200) between them.

4. The magnet holder of claim 1 wherein the base portion (310) has attached thereto a double sided adhesive cover (510) suitable for attaching the magnet holder to a mounting surface (120).

5. The magnet holder of claim 2 wherein the double sided adhesive cover (510) covers the whole of the base portion of the magnet holder (310, 410, 420) and the double sided adhesive cover is configured to deformably cover the separation of the clips (16) from the peripheral wall (440), for prevention of the ingress of material into the magnet holder (10) from the direction of the base.

6. The magnet holder of any of claims 1 to 3 wherein the outer base portion (410) comprises a retaining fastener aperture (100) for accommodating a fastener suitable for fastening the magnet holder against a surface to prevent, when so fastened said movement relative to the central base portion (310) for the moving apart of the one or more clips (16).

7. The magnet holder of any preceding claim wherein the magnet retaining clips 16 serve, in use when holding a magnet, to restrict lateral movement of the magnet and a further magnet retaining latch (18) as an outer end of the retaining clip (16) serves to restrict movement of the magnet in a first direction perpendicular to the lateral direction and magnet supports (220) serve to restrict movement of the magnet in a second direction perpendicular to the lateral direction and opposite to the first direction.

8. A magnet holder assembly 30 comprising the magnet holder of any preceding claim, the assembly (30) further comprising a magnet (200) retained by the retaining clips (16) of the magnet holder (10) and a magnet holder lid (20) to enclose the magnet within the magnet holder.

9. The magnet holder assembly of claim 8 wherein the magnet holder assembly comprises the magnet holder lid (20) providing a hermetic seal with the magnet holder (10) and further comprising in the double sided adhesive cover 0 providing a hermetic seal with the magnet holder (10) such that the magnet is hermetically sealed within the magnet holder.

10. A kit of parts comprising the magnet holder of any of claims 1 to 7, a magnet (200) for retention by the retaining clips (16) of the magnet holder (10) and a magnet holder lid (20) for enclose the magnet within the magnet holder.

11. The kit of parts of claim 10 further comprising fasteners (110) for fastening the magnet holder (10) to a support surface through said retaining fastener apertures (100).

12. The kit of parts of claim 11 wherein the retaining fasteners (110) are ferromagnetic.

13. The kit of parts of claim 10 or claim 11 wherein there are two retaining fastener apertures (100).

14. A method of attaching a magnet holder (10) to a mounting surface (120) comprising inserting a magnet (200) into the magnet holder and attaching the magnet holder (10) to the mounting surface such that the magnet (200) cannot be removed by virtue of restricting the movement of the magnet retaining clips (16).

15. The method of claim 14 including, placing ferromagnetic retaining fasteners (110) in retaining fastener apertures (100) wherein the fasteners are retained in place by the magnet (200) prior to the attaching the magnet holder (10) to the support surface (120) by means of the fasteners (110).

## Amended claims

### Amended claims in accordance with Rule 137(2) EPC.

1. A magnet holder, for location on movable objects so that when the object is moved a suitable proximity detector, such as a reed switch can be activated or released the magnet holder comprising:
a. an outer shell comprising a peripheral wall (440, 450);
b. a base portion (310) from which the peripheral wall (440) laterally extends;
c. one or more magnet retaining clips (16):
i. those clips (16) being remote from the peripheral wall (440, 450);
ii. those clips (16) being secured on a first side to the base portion (310) by deformable member 16A;
iii. such that the one or more clips (16) is moveable to enable a magnet (200) to be introduced between the clips; and
iv. on a side of the one or more clips (16) remote from the first side, an outer base portion (410) is present and configured such that it must be moved relative to the central base portion (310) for the moving of the one or more clips (16), to enable the magnet (200) when held by the one or more clips (16) to be removed.

2. The magnet holder of claim 1, the magnet holder further comprising:
a. two or more of the magnet retaining clips (16):
i. those clips (16) being movable apart from one another to enable the magnet (200) to be introduced between the clips (16); and
ii. on a side of each clip (16) remote from the first side, outer base portion (410) is present and configured such that it must be moved relative to the central base portion (310) for the moving apart of the clips (16), such as to, in use enable the magnet (200) held between the clips (16) to be removed.

3. The magnet holder of claim 1, wherein there are two clips (16) and the clips (1) are laterally opposed for receiving the magnet (200) between them.

4. The magnet holder of claim 1 wherein the base portion (310) has attached thereto a double sided adhesive cover (510), the double sided adhesive cover (510) suitable for further attaching the magnet holder to a mounting surface (120).

5. The magnet holder of claim 4 wherein the double-sided adhesive cover (510) covers the whole of the base portion of the magnet holder (310, 410, 420) and the double-sided adhesive cover is configured to deformably cover the separation of the clips (16) from the peripheral wall (440), for prevention of the ingress of material into the magnet holder (10) from the direction of the base.

6. The magnet holder of any of claims 1 to 3 wherein the outer base portion (410) comprises a retaining fastener aperture (100) for accommodating a fastener suitable for fastening the magnet holder against a surface to prevent, when so fastened said movement relative to the central base portion (310) for the moving apart of the one or more clips (16).

7. The magnet holder of any preceding claim wherein the magnet retaining clips 16, when holding the magnet, are configured to restrict lateral movement of the magnet and the magnet holder further comprises a further magnet retaining latch (18) being an outer end of the retaining clip (16) configured to restrict movement of the magnet in a first direction perpendicular to the lateral direction and the magnet supports (220) are configured to restrict movement of the magnet in a second direction perpendicular to the lateral direction and opposite to the first direction.

8. A magnet holder assembly 30 comprising the magnet holder of any preceding claim, the assembly (30) further comprising a magnet (200) retained by the retaining clips (16) of the magnet holder (10) and a magnet holder lid (20) to enclose the magnet within the magnet holder.

9. The magnet holder assembly of claim 8 as dependent upon any of claim 4, 5 or 7 wherein the magnet holder assembly comprises the magnet holder lid (20) providing a hermetic seal with the magnet holder (10) the double-sided adhesive cover (510) providing a hermetic seal with the magnet holder (10) such that the magnet is hermetically sealed within the magnet holder.

10. A kit of parts comprising the magnet holder of any of claims 1 to 7, a magnet (200) for retention by the retaining clips (16) of the magnet holder (10) and a magnet holder lid (20) for enclose the magnet within the magnet holder.

11. The kit of parts of claim 10 further comprising fasteners (110) for fastening the magnet holder (10) to a support surface through said retaining fastener apertures (100).

12. The kit of parts of claim 11 wherein the retaining fasteners (110) are ferromagnetic.

13. The kit of parts of claim 10 or claim 11 wherein there are two retaining fastener apertures (100).

14. A method of attaching a magnet holder (10) of any of claims 1 to 9 to a mounting surface (120), the method comprising inserting a magnet (200) into the magnet holder and attaching the magnet holder (10) to the mounting surface such that the magnet (200) cannot be removed by virtue of restricting the movement of the magnet retaining clips (16).

15. The method of claim 14 including, placing ferromagnetic retaining fasteners (110) in retaining fastener apertures (100) wherein the fasteners are retained in place by the magnet (200) prior to the attaching the magnet holder (10) to the support surface (120) by means of the fasteners (110).
